# EUROPÄISCHE PATENTSCHRIFT

(11) **EP 2 575 525 B1**
(45) Veröffentlichungstag und Bekanntmachung des Hinweises auf die Patenterteilung: **22.03.2017**
(21) Anmeldenummer: 11726648.6
(22) Anmeldetag: 07.06.2011
(51) Int. Cl.: B29L 31/50, A43B 7/28, A43B 5/04, A43B 5/16, A43D 3/00

(54) **VORRICHTUNG UND VERFAHREN ZUM ANPASSEN EINES SCHUHS**
APPARATUS AND METHOD FOR ADJUSTING A SHOE
APPAREIL ET PROCÉDÉ POUR AJUSTER UNE CHAUSSURE

(30) Priorität: 07.06.2010 AT 9252010
(43) Veröffentlichungstag der Anmeldung: 10.04.2013
(73) Patentinhaber: Fischer Sports GmbH, 4910 Ried/Innkreis (AT)
(72) Erfinder: LÜZLBAUER, Adolf, 4853 Steinbach am Attersee (AT); PIEBER, Alois, 4921 Hohenzell (AT); RESCH, Franz Josef, 8970 Schladming (AT)
(74) Vertreter: Sonn & Partner Patentanwälte
(86) Internationale Anmeldenummer: PCT/AT2011/000253
(87) Internationale Veröffentlichungsnummer: WO 2011/153567

(56) Entgegenhaltungen:
- EP-A1- 0 391 752
- WO-A1-02/28215
- WO-A2-2009/046477

## Beschreibung

Die Erfindung betrifft eine Vorrichtung zum Anpassen eines vorgefertigten, zumindest teilweise aus hartem, thermoplastischem Kunststoff bestehenden Schuhs an den Fuß bzw. das Bein eines Benutzers durch ein den Schuh im Wesentlichen umfassendes Druckelement mit einem für die Aufnahme des Schuhs vorgesehenen Aufnahmeraum, wobei der Aufnahmeraum zumindest teilweise von einem verformbaren Material begrenzt ist, das eine innere Schicht des einen Hohlraum einschließenden Druckelements bildet, das eine zum Einbringen eines Druckaufbringungsfluids vorgesehene Einlassöffnung aufweist, wobei das Druckelement zur Ausbildung des Hohlraums eine mit der inneren Schicht dicht verbundene äußere Schicht aufweist.

Weiters betrifft die Erfindung ein Verfahren zur Herstellung eines an den Fuß bzw. das Bein eines Benutzers angepassten Schuhs aus hartem, thermoplastischem Kunststoff für Sportzwecke, wobei ein vorgefertigter Schuh zumindest bereichsweise erwärmt und durch Verformen des erwärmten Bereichs unter Druckanwendung durch obige Vorrichtung von außen angepasst wird, wonach der Schuh abgekühlt wird, wobei der Schuh im erwärmten Zustand in ein den Schuh im Wesentlichen einfassendes hüllenförmiges Druckelement eingeführt wird, wobei das Druckelement zumindest teilweise aus einem verformbaren, einen Hohlraum begrenzenden Material besteht, und ein Druckaufbringungsfluid in den Hohlraum eingeleitet wird, so dass der Schuh zumindest bereichsweise an den Fuß bzw. das Bein des Benutzers angepasst wird.

Aus dem Stand der Technik sind bereits verschiedene Verfahren zur Anpassung eines vorgefertigten Schuhs an den Fuß eines Benutzers bekannt. So ist es aus der WO 2009/046477 A2 bekannt den Schuh zunächst zu erwärmen und nachdem der Benutzer den Schuh angezogen hat eine Folie über den Schuh zu stülpen und über das Aufbringen eines Unterdrucks die vorerwärmte Schale an den Fuß anzupassen. Grundsätzlich funktioniert dieses Verfahren einwandfrei. Als nachteilig hat sich hierbei jedoch herausgestellt, dass das Anlegen des Unterdrucks von dem Benutzer als unangenehm empfunden wird.

Aus der US 3,613,271 ist ein Verfahren zum Anpassen eines vorgefertigten Schuhs bekannt, bei welchem durch Anlage eines manuellen Drucks im Knöchelbereich eine Anpassung an den Fuß des Benutzers vollzogen wird. Alternativ zu dem manuellen Anpressdruck kann auch eine nicht näher beschriebene Druckmanschette im Knöchelbereich vorgesehen werden; ein derartiges Verfahren verlangt daher eine hohe Geschicklichkeit bzw. Fachkunde von der die Anpassung durchführenden Person.

Des weiteren ist aus der WO 02/28215 A1 zum einen ein Apparat bekannt, der den Schuh mittels Druckaufbringung von außen durch ein mit Luft aufblasbares Druckelement, welches eine Öffnung zur Aufnahme des Schuhs sowie eine Lufteinlassöffnung zum Aufblasen des Druckelements aufweist und seinerseits von einem festen Behältnis umgeben ist, an den Fuß anpasst und zum anderen ein Verfahren, das die Anpassung durch Aufwärmen des Schuhs, Anlegen des Schuhs durch den Träger, Einführung des Schuhs in den bekannten Apparat und schließlich Druckaufbringung durch den Apparat von außen auf den Schuh erreicht.

Ein Ziel der vorliegenden Erfindung ist es demzufolge eine Vorrichtung bzw. ein Verfahren zu schaffen, mit welcher bzw. welchem auf einfache und zuverlässige Weise auch von Nicht-Fachkräften eine zweckmäßige Anpassung des vorgefertigten Schuhs an den Fuß bzw. das Bein eines Benutzers erzielt werden kann, während jedoch bestimmte Bereiche des Schuhs nicht verformt werden.

Erfindungsgemäß wird dies bei der Vorrichtung der eingangs angeführten Art dadurch erzielt, dass das den Schuh im Wesentlichen umfassende Druckelement mindestens einen Bereich aufweist, in welchen kein Druckaufbringungsfluid eindringt.

Um zu vermeiden, dass die gesamte vom Druckelement umgebene Schuhoberfläche bei Einbringung des Druckaufbringungsfluids mit Druck beaufschlagt wird, kann es vorteilhaft sein, wenn die innere und die äußere Schicht bereichsweise flächig miteinander verbunden sind. In dem Bereich, in dem die innere und äußere Schicht flächig miteinander verbunden sind, kann somit kein Druckaufbringungsfluid eindringen und somit auch kein Druck auf die Schuhoberfläche aufgebracht werden. Selbstverständlich können Bereiche, in welchen kein Druckaufbringungsfluid eindringt, auch auf andere Art und Weise, beispielsweise durch eine gänzliche Aussparung des Druckelements oder durch lediglich eine einschichtige Ausbildung in diesem Bereich, erzielt werden.

In diesem Zusammenhang ist es insbesondere zweckmäßig, wenn die innere und äußere Schicht in einem zur Anlage im Bereich einer Sohle des Schuhs vorgesehenen Sohlenbereich flächig miteinander verbunden sind. Eine Druckaufbringung im Bereich der Schuhsohle würde nachteiligerweise zu einer unerwünschten Änderung der vorgefertigten Form der Sohle führen.

Mit Hilfe der erfindungsgemäßen Vorrichtung ist es lediglich erforderlich, dass der Schuh im angezogenen Zustand in dem Aufnahmeraum der Anpassungsvorrichtung aufgenommen wird; sodann kann über das Einleiten eines Druckaufbringungsfluids vorzugsweise Luft in den Hohlraum, der innenseitig, d.h. auf der dem Schuh zugewandten Seite, aus einem verformbaren Material besteht, eingeleitet werden und somit Druck von außen auf den Schuh aufgebracht werden, sodass jene Bereiche in denen der Fuß kleiner ist als der vorgefertigte Schuh durch den mittels des Druckelements aufgebrachten Druck an den Fuß angepasst wird. Sofern der Schuh vor dem Einsetzen in die Vorrichtung über die Erweichungstemperatur des Kunststoffmaterials erwärmt wurde, werden jene Bereiche des Schuhs deren Volumen kleiner ist als der Fuß des Benutzers, bereits nach Einführen des Fußes in den Schuh auseinander gedrückt, sodass der Fuß selbst als eine Art Druckstempel wirkt. Sofern der Druck über das Druckelement solange gehalten wird bis das Material unter die Erweichungstemperatur abgekühlt ist, behält der Schuh auch nach Ablegen des Drucks die mittels der Vorrichtung hergestellte Geometrie bei. Ein manuelles Anpassen des erwärmten Kunststoffmaterials ist somit nicht erforderlich. Von einem Bediener der Vorrichtung ist lediglich die Positionierung im Aufnahmeraum der Vorrichtung und das Einleiten des Druckaufbringungsfluids erforderlich, sodass das Anpassen des Schuhs an den Fuß des Benutzers auf einfache Weise auch von Nicht-Fachkräften durchgeführt werden kann.

Um den Druck, mit welchem das Druckaufbringungsfluid in den Hohlraum eingeleitet wird, zuverlässig zu begrenzen, ist es günstig, wenn die Einlassöffnung mit einem vorzugsweise als regelbares Druckbegrenzungsventil ausgebildeten Einlassventil versehen ist.

Sofern eine Auslassöffnung vorgesehen ist, die mit einem vorzugsweise als regelbares Druckbegrenzungsventil ausgebildeten Auslassventil versehen ist, kann zugleich der Einbringung des Druckaufbringungsfluids auch eine Abführung des Druckaufbringungsfluids über die Auslassöffnung erzielt werden, sodass mit dem Druckelement eine permanente Luftströmung erzielt wird. Hierdurch wird während der Druckaufbringung stetig kühles Fluid nachgeliefert und somit die Abkühlung des zuvor erwärmten Schuhs beschleunigt. Um einen Überdruck zwischen Einlass und Auslassöffnung sicherzustellen, kann beispielsweise der Auslassdruck auf z.B. ca. 0,6 bar begrenzt werden, wogegen der Einlassdruck auf ca. 0,8 bar eingestellt werden kann.

Zur Ausbildung des zur Aufnahme des Aufbringungsfluids vorgesehenen Hohlraums weist das Druckelement zur Ausbildung des Hohlraums eine mit der inneren Schicht dicht verbundene äußere Schicht auf. Eine derartige Ausbildung des - abgesehen von einer Einstiegsöffnung - den Schuh im Wesentlichen umschließenden Druckelements aus zumindest zwei miteinander verbundenen Schichten, d.h. einer inneren und äußeren Schicht, hat sich in der Praxis als kostengünstige und einfache Herstellung eines derartigen sackförmigen Druckelements herausgestellt. Selbstverständlich kann das Druckelement jedoch auch aus einem einzigen entsprechend geformten und verformbaren Materialstück, d.h. einem randseitig mit sich selbst verbundenen einzigen Materialstück, hergestellt werden. Das Vorsehen von zwei Schichten ist jedoch auch vorteilhaft, um eine Anpassung der jeweiligen Schichten an ihren Zweck vorsehen zu können. So ist zweckmäßig, wenn die innere Schicht aus einem beschichteten Gewebe besteht, da hierdurch auf einfache und kostengünstige Weise ein für das Druckaufbringungsfluid dichtes verformbares Material bereitgestellt wird, welches zur Anlage auf der äußeren Oberfläche des Schuhs zwecks Druckaufbringung geeignet ist. Da die äußere Schicht nicht zur Druckaufbringung auf den Schuh vorgesehen ist, ist es ausreichend, wenn die äußere Schicht aus einer Kunsstofffolie, insbesondere aus thermoplastischem Polyurethan, Polyvinylchlorid oder dergleichen, besteht.

Um die Aufnahme des Schuhs in der Vorrichtung zu vereinfachen, ist es günstig, wenn der Umfang einer mit dem Aufnahmeraum in Verbindung stehenden Einstiegsöffnung über das Öffnen zumindest eines Verschlusselements vergrößerbar ist.

In diesem Zusammenhang ist es günstig, wenn sich ein über das Verschlusselement verschließbarer Verbindungsbereich des Druckelements im Wesentlichen von der Einstiegsöffnung bis annähernd zu dem Sohlenbereich erstreckt. Ein derartiger Verbindungsbereich, der sich vorzugsweise von der Wade bis in den Fersenbereich des Benutzers erstreckt, ermöglicht ein besonders einfaches Einführen des Schuhs in das im geschlossenen Zustand den Schuh im Wesentlichen einfassende Druckelement. Somit ist einerseits ein einfacher Ein- bzw. Ausstieg und andererseits die Möglichkeit einer umfassenden Druckaufbringung auf die Schuhoberfläche gewährleistet.

Um die Ausdehnung des Druckelements auf der Außenseite, d.h. auf der vom Schuh abgewandten Seite, zu begrenzen und zudem im praktischen Gebrauch eine Beschädigung der Vorrichtung durch spitze Gegenstände zu vermeiden, ist es von Vorteil, wenn das Druckelement von einer im Wesentlichen druckfesten Hülle umgeben ist. Hierbei kann die äußere druckfeste Hülle beispielsweise aus einem stabilen Textilgewebe bestehen.

Das Verfahren der eingangs angeführten Art ist dadurch gekennzeichnet, dass das Druckelement mindestens einen Bereich aufweist, in welchen kein Druckaufbringungsfluid eindringt.

Wie bereits im Zusammenhang mit der erfindungsgemäßen Vorrichtung erläutert, kann durch das Vorsehen des den Schuh im Wesentlichen ein- bzw. umfassenden Druckelements das zumindest der dem Schuh zugewandten Seite über Einbringung eines Druckaufbringungsfluids einen Anpressdruck in einen Teilbereich auf die Schuhoberfläche aufbringen kann, wobei in mindestens einem Bereich kein Druckaufbringungsfluid in das Druckelement eindringt, auf einfache Weise die gewünschte Anpassung, in den gewünschten Bereichen des Schuhs aus hartem thermoplastischen Kunststoffmaterial an den Fuß eines Benutzers erzielt werden.

Um zuverlässig eine dauerhafte Anpassung des vorgefertigten Schuhs in Anbetracht des von innen von dem Fuß aufgebrachten Drucks bzw. von außen über das Druckelement aufgebrachten Drucks zu erzielen, ist es günstig, wenn der Schuh, insbesondere in einem Ofen, zumindest bereichsweise über die Erweichungstemperatur des Materials des Schuhs erwärmt wird, bevor der Fuß des Benutzers in den Schuh eingeführt wird.

Sofern das Druckaufbringungsfluid unter einem Einlassdruck in das Druckelement eingeleitet wird, der höher ist als ein Auslassdruck des zugleich abgeleiteten Druckaufbringungsfluids, kann wie bereits im Zusammenhang mit der erfindungsgemäßen Vorrichtung erläutert, während der Druckaufbringung eine dauerhafte Strömung des Druckaufbringungsfluids erzielt werden, wodurch beständig kaltes Fluid nachströmt und somit die Abkühlung des zuvor erwärmten Schuhs vorteilhafterweise beschleunigt wird.

Weiters ist es für eine effiziente Abkühlung des zuvor erwärmten Schuhs und somit eine schnelle Anpassung an den Fuß eines Benutzers günstig, wenn eine den Schuh zumindest bereichsweise abdeckende gekühlte Manschette über den Schuh gestülpt wird, bevor der Schuh in das Druckelement eingeführt wird. Die gekühlte Manschette kann hierbei ein Kühlgel enthalten, welches in einen von einer vorteilhafterweise verformbaren Folie gebildeten Hohlraum eingefüllt wird. Gegebenenfalls kann die Folie zusätzlich einen Überzug aus einem verformbaren Textilgewebe aufweisen. Eine derartige Manschette bzw. Gamasche wird vor Gebrauch in einem Kühlgerät, d.h. in einer Gefriertruhe oder dergleichen, gekühlt und kann somit den Abkühlvorgang des Schuhs wesentlich beschleunigen.

Hinsichtlich eines effizienten Verfahrens ist es hierbei günstig, wenn die Manschette unmittelbar nach dem Anziehen des Schuhs durch den Benutzer über den Schuh gestülpt wird. Nachdem die gekühlte Manschette somit auf dem Schuh appliziert wurde, kann in weiterer Folge über das Druckelement ein Überdruck aufgebaut werden, sodass sich die innere Schicht des Druckelements an die äußere Oberfläche der Manschette anschmiegt. Die gekühlte Manschette bzw. das in der Gamasche aufgenommene Kühlgel überträgt nach dem Prinzip des hydrostatischen Drucks den Druck sodann von dem Druckelement auf die Oberfläche des Schuhs. Durch den Kontakt zwischen der Manschette und der erwärmten Schuhoberfläche kommt es zu einer guten Wärmeleitung und somit zu einer raschen Abkühlung des in seiner Form an den Fuß des Benutzers angepassten Schuhs.

Hinsichtlich einer kostengünstigen, einfachen Ausführung des Verfahrens ist es von Vorteil, wenn als Druckaufbringungsfluid Luft in das Druckelement eingeleitet wird.

Die Erfindung wird nachstehend anhand von in den Zeichnungen dargestellten bevorzugten Ausführungsbeispielen, auf die sie jedoch nicht beschränkt sein soll, noch näher erläutert.

Im Einzelnen zeigen in den Zeichnungen:
Fig. 1 eine Ansicht eines Schuhs aus einem harten thermoplastischen Material;
Fig. 2 eine Ansicht eines aus einem textilen Gewebe bestehenden Innenschuhs zur Aufnahme in dem Schuh gemäß Fig. 1;
Fig. 3 eine Schnittansicht des Schuhs mit einem darin aufgenommen Fuß bzw. Bein eines Benutzers;
Fig. 4 schematisch eine Erwärmung des Schuhs;
Fig. 5 eine Ansicht des in der erfindungsgemäßen Vorrichtung aufgenommenen Schuhs;
Fig. 6 eine Ansicht entsprechend der Anordnung gemäß Fig. 5 jedoch auf die Fersen- bzw. Wadenseite des Schuhs;
Fig. 7 eine perspektivische Ansicht des Druckelements;
Fig. 8 eine Schnittansicht gemäß der Linie VIII-VIII in Fig. 7;
Fig. 9 eine weitere Ansicht der Vorrichtung, wobei ein von der Einstiegsöffnung zu einem Sohlenbereich verlaufende Verschlussvorrichtung gezeigt ist;
Fig. 10 eine Fig. 9 entsprechende Ansicht, wobei die Verschlussvorrichtung zwecks Einstiegs des Fußes des Benutzers samt Schuh geöffnet ist;
Fig. 11 eine perspektivische Ansicht der Vorrichtung, wobei eine das Druckelement einfassende Hülle ersichtlich ist;
Fig. 12 eine perspektivische Ansicht des anzupassenden Schuhs;
Fig. 13 eine perspektivische Ansicht gemäß Fig. 12 jedoch mit einer über den Schuh gestülpten Kühlmanschette; und
Fig. 14 eine Ansicht ähnlich gemäß Fig. 10, wobei jedoch eine Kühlmanschette über den anzupassenden Schuh gestülpt ist.

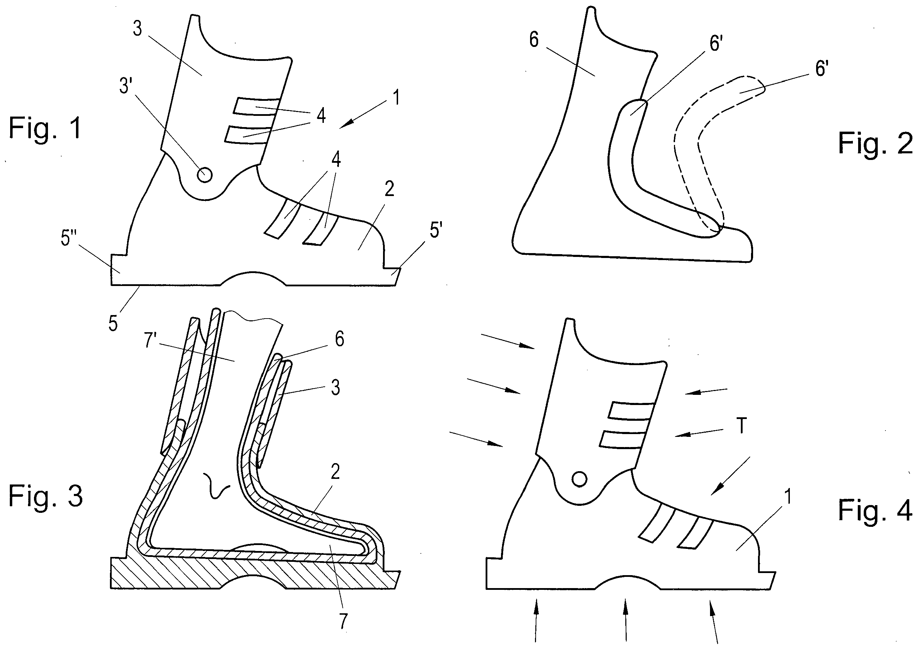

In Fig. 1 ist ein Skischuh 1 gezeigt, der eine untere, den Fuß bis knapp über den Knöchelbereich einschließende Schale, d.h. Unterschale 2, aufweist, an welcher eine Manschette 3 über ein Verbindungselement, z.B. ein Gelenk 3', angelenkt ist. Außerdem weist der Skischuh 1 übliche Verschlussmittel 4, d.h. Schnallen, und eine üblicherweise mit der Schale 2 einstückig ausgebildete Sohle 5 auf, die einen über die Unterschale 2 hervorragenden vorderen Anschlussbereich 5' und über die Unterschale 2 fersenseitig hervorragenden hinteren Anschlussbereich 5" zwecks Aufnahme in einer Skibindung aufweist.

In Fig. 2 ist ein Innenschuh 6 gezeigt, der eine Zunge 6' aufweist, welche zum einfacheren Einstieg in eine vordere Position geklappt werden kann, die in Fig. 2 strichliert dargestellt ist.

In der in Fig. 3 gezeigten Schnittansicht ist ersichtlich, dass in den Schuh 1 der Innenschuh 6 eingesetzt ist und sodann den menschlichen Fuß 7 bzw. den unteren Abschnitt des Beins 7' des Benutzers in den Schuh 1 aufgenommen wird. Die Unterschale 2 sowie die Manschette 3 bestehen üblicherweise aus einem thermoplastischen Material; die in Fig. 3 gezeigte vorgefertigte Form wird im Spritzgießverfahren hergestellt. Der Innenschuh 6 hingegen besteht üblicherweise aus textilem Material oder aus Leder einschließlich Polsterungen, um den Komfort für den Benutzer zu erhöhen, aber auch um ein gewisses Maß an Passform zwischen dem harten Schuh 1, auch Außenschale genannt, und dem Fuß 7 bzw. Bein 7' ausgleichen zu können.

Wie in Fig. 4 schematisch dargestellt, wird dem Schuh 1, mit oder ohne dem Innenschuh 6, z.B. in einem Ofen oder dergleichen, Wärme zugeführt um das thermoplastische Material, aus welchem der Schuh 1 besteht, über die sogenannte Erweichungstemperatur des Materials zu erwärmen. Je nach verwendetem Material wird der Schuh 1 üblicherweise auf eine Temperatur zwischen 70°C und 140°C erwärmt.

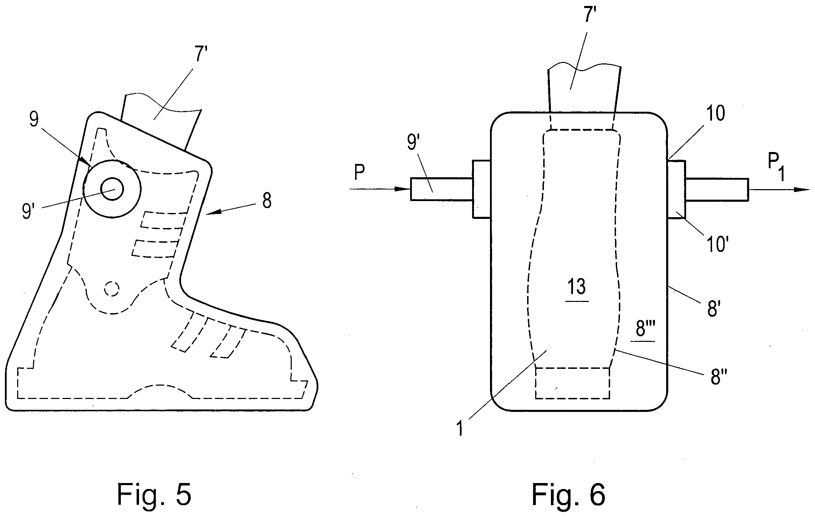

Anschließend steigt der Benutzer mit dem Fuß 7 bzw. dem Bein 7' sodann in den Schuh 1, vorzugsweise unter Verwendung des Innenschuhs 6 ein und verschließt den Schuh 1 mittels der Schnallen 4. Sodann steigt der Benutzer mit dem erwärmten Skischuh 1 in das in Fig. 5 dargestellte Druckelement 8, das im Wesentlichen sack- bzw. hüllenförmig ausgebildet ist und den Schuh 1 - abgesehen von einer Einstiegsöffnung 12' - zur Gänze umschließt.

Das Druckelement 8 weist hierbei eine Öffnung 9 auf, in welcher ein Ventil 9' aufgenommen ist. Wie in Fig. 6 schematisch dargestellt kann über das Ventil 9' somit in einen von dem Druckelement 8 aufgespannten Hohlraum 8'" Druckluft in Pfeilrichtung P eingeführt werden, sodass sich zwischen einer inneren Schicht 8' und einer - die Öffnung 9 aufweisenden - äußeren Schicht 8" des Druckelements 8 ein Überdruck aufbaut. Über diesen Überdruck wird der Schuh 1, d.h. sowohl die Unterschale 2 als auch die Manschette 3, an den Fuß 7 bzw. das Bein 7' des Benutzers gepresst. Jene Bereiche, bei denen der Fuß 7 bzw. das Bein 7' des Benutzers größer ist, wurden zuvor bereits nach außen verformt, da der Fuß 7 bzw. das Bein 7' beim Einsteigen in den erwärmten Schuh 1 in der Art eines Pressstempels wirkt. Jene Bereiche, in denen der Fuß 7 bzw. das Bein 7' kleiner ist als der vorgefertigte Schuh, werden sodann durch Anlage der inneren Schicht 8" über den von der eingebrachten Druckluft erzeugten Überdruck zusammengedrückt und somit an den Fuß 7 bzw. das Bein 7' angepasst. Um die somit erzielte Anpassung des vorgefertigten Schuhs 1 an den Fuß 7 bzw. das Bein 7' des Benutzers beizubehalten, wird der Schuh in diesem Zustand unter die Erweichungstemperatur abgekühlt, vorzugsweise mindestens um ca. 10°C unterhalb der Erweichungstemperatur des thermoplastischen Kunststoffmaterials des Schuhs 1.

Um den Vorgang des Abkühlens zu beschleunigen bzw. auch um gezielt einen gegebenen Überdruck im Hohlraum 8' einstellen zu können, kann das Druckelement 8 zusätzlich zu der Einlassöffnung 9 eine Auslassöffnung 10 aufweisen, die mit einem Auslassventil 10' versehen ist. Beide Ventile 9' und 10' sind in vorteilhafter Weise regelbar, sodass z.B. das Einlassventil 9' auf ca. 0,8 bar Überdruck und das Auslassventil 10' auf ca. 0,6 bar eingestellt werden kann. Hierdurch ergibt sich, dass in dem Druckelement 8 eine permanente Luftströmung sichergestellt wird, wodurch während der Druckaufbringung dauerhaft kalte Luft nachgeführt wird und somit die Abkühlung des zuvor erwärmten Schuhs 1 beschleunigt wird.

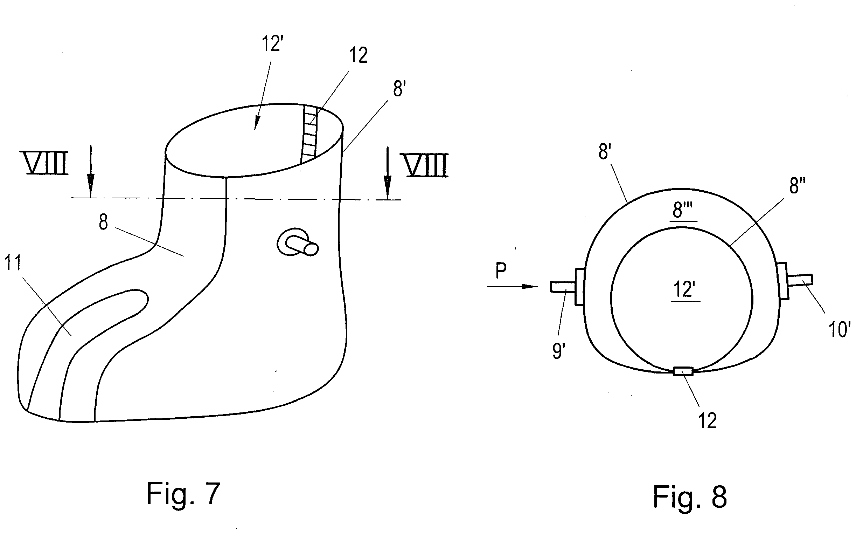

In der perspektivischen Ansicht gemäß Fig. 7 ist ersichtlich, dass das Druckelement 8 nicht durchgängig aus zwei Schichten, zwischen welchen das Druckmedium, d.h. vorzugsweise Luft, zwecks Druckaufbringung eingeleitet werden kann, bestehen muss, sondern dass beispielsweise im oberen Vorfußbereich bis hin zur Ristbeuge ein Bereich 11 vorgesehen sein kann, in dem die innere und äußere Schicht 8', 8" flächig miteinander verbunden sind. Hierdurch wird vorteilhafterweise bewirkt, dass in diesem Bereich 11 kein Druck auf den Schuh 1 aufgebracht wird, sodass sichergestellt werden kann, dass bei Benutzern mit hohem Rist keine Druckstellen in diesem Bereich verursacht werden.

In der Schnittansicht gemäß Fig. 8 ist insbesondere der zwischen der inneren und der äußeren Schicht ausgebildete Hohlraum 8"' ersichtlich, in welchem über das Einlassventil 9' Druckluft zugeführt wird und, sofern erwünscht, über das Auslassventil 10' Druckluft abgeführt werden kann. Zudem ist in der Schnittansicht gemäß Fig. 8 ein Verschlusselement 12 in Form eines Reißverschlusses gezeigt.

Gemäß einer nicht dargestellten Ausführungsvariante kann der Hohlraum 8"' des Druckelements 8 teilweise (z.B. bis zwei Drittel des Volumens; auf jeden Fall bis unterhalb des Einlassventils 9' bzw. Auslassventils 10') mit vorzugsweise kaltem Wasser aufgefüllt sein. Durch Einbringen von Druckluft kann das Druckelement 8 wie ein Druckkessel einer Hauswasseranlage ausgebildet werden. In diesem Fall wird durch den oberhalb des Wassers befindlichen Luftpolster Druck auf das Wasser ausgeübt, welches wiederum die innere Schicht 8" an die Schuhoberfläche anpresst. Durch die Verwendung von kaltem Wasser kommt es zur raschen Abkühlung des erwärmten Schuhs 1.

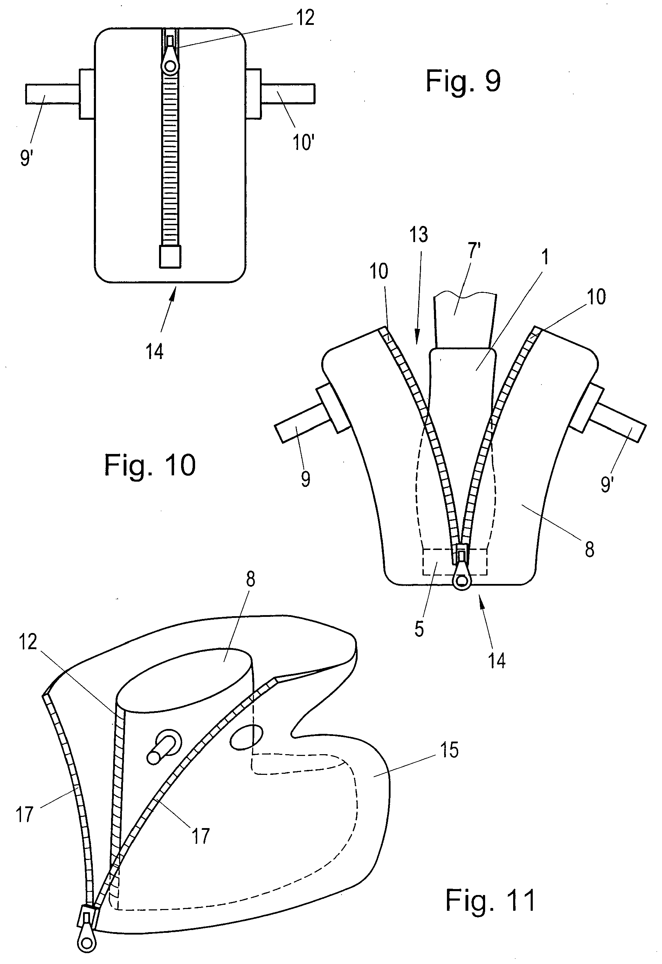

Wie insbesondere in den Figuren 9 und 10 ersichtlich kann durch das Vorsehen eines derartigen Verschlusselements 12 der Umfang der Einstiegsöffnung 12', welche mit einem zur Aufnahme des Schuhs 1 vorgesehenen Aufnahmeraum 13 des Druckelements 1 in Verbindung steht, vergrößert werden. Dadurch kann wie insbesondere in Fig. 10 ersichtlich, das Einführen des Schuhs 1 in den Aufnahmeraum 13 des Druckelements 8 deutlich vereinfacht werden. Das Verschlusselement 12, d.h. ein Reißverschluss oder auch eine Knopfreihe, eine Druckknopfreihe, ein Klettverschluss, eine Schnürung oder dergleichen, verläuft hierbei vorteilhafterweise von der Einstiegsöffnung 12' bis zu einem unteren Bereich 14 des Druckelements 8, in welchem, wie in Fig. 10 ersichtlich, üblicherweise die Sohle 5 des Schuhs 1 in der Betriebsstellung der Vorrichtung angeordnet ist. In diesem Sohlenbereich 14 des Druckelements 8 sind - ebenso wie im Bereich 11 - die äußere und innere Schicht 8" vorteilhafterweise flächig miteinander verbunden, um einen Eintritt von Druckluft in diesem Bereich zu vermeiden und somit sicherzustellen, dass in diesem Bereich keine Verformung stattfindet, sondern die vorgefertigte Form beibehalten wird; somit kann eine zuverlässige Aufnahme der Anschlussbereiche 5', 5" der Sohle 5 in einer Skibindung gewährleistet werden.

In Fig. 11 ist sodann ersichtlich, dass das Druckelement 8 von einer des Druckelements 8 umschließenden Hülle 15 aufgenommen werden kann. Die Hülle 15 kann hierbei aus einem stabilen Textilgewebe bestehen, um das Druckelement 8 nach Einbringen der Druckluft entlang der äußeren Schicht 8' abzustützen. Durch Vorsehen einer derartigen äußeren Hülle 15 kann die äußere Schicht 8' in einfacher und kostengünstiger Weise aus dünnen, elastischen Folien, z.B. aus thermoplastischem Polyurethan, Polyvinylchlorid oder dergleichen hergestellt werden. Die äußere Stabilität bzw. der Schutz vor Beschädigung durch spitze Gegenstände oder dergleichen wird hierbei von der äußeren Hülle 15 übernommen. Diese weist zu dem Verschlussmittel 12 korrespondierende und im geschlossenen Bereich im Wesentlichen benachbart angeordnete Verschlussmittel 7 auf, um somit auch einen einfachen Einstieg in die Hülle 15 zu ermöglichen. Die innere Schicht 8" besteht hinsichtlich einer zuverlässigen zweckmäßigen Druckaufbringung auf die Unterschale 2 und die Manschette 3 sowie die Schnallen 4 aus einem luftdichten beschichteten Gewebe.

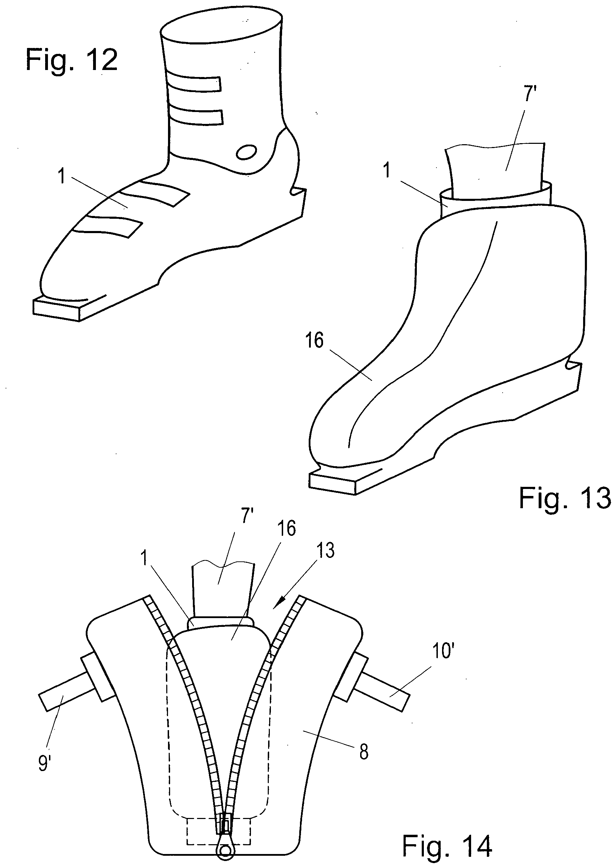

In den Fig. 12 bis 13 ist ein weiteres vorteilhaftes Ausführungsbeispiel gezeigt, wobei in Fig. 12 - ebenso wie bei dem Ausführungsbeispiel gemäß den Fig. 1 bis 11 - ein über die Erweichungstemperatur vorgewärmter Schuh 1 gezeigt ist. Nachdem der Benutzer in den Schuh 1 eingestiegen ist, wird jedoch unmittelbar danach eine Manschette bzw. Gamasche 16 über den Schuh 1 gestülpt. Diese Gamasche 16 beinhaltet ein Kühlmittel, z.B. ein Kühlgel, welches in einem von verformbaren Folien geformten Hohlraum eingefüllt ist. Gegebenenfalls kann die Gamasche 16 einen Überzug aus einem textilen Gewebe aufweisen. Zur Kühlung der Gamasche 16 wird diese vor dem Überstülpen über den Schuh 1 in einem Kühlgerät, z.B. eine Gefriertruhe, stark abgekühlt und sodann auf den Schuh 1 aufgesetzt, um den Abkühlvorgang wesentlich zu beschleunigen.

Wie in Fig. 14 gezeigt, steigt der Benutzer sodann mit dem erwärmten Schuh 1 unter Verwendung der Kühlgamasche 16 in den Aufnahmeraum 13 des Druckelements 8 ein. In weiterer Folge wird das Druckelement 8 über die Verschlussmittel 12 verschlossen und wie bereits vorgehend beschrieben ein Überdruck über das Einbringen von Druckluft aufgebaut, sodass die innere Schicht 8" des Druckelements 8 sich an die äußere Oberfläche der Kühlgamasche 16 anschmiegt. Das in der Gamasche 16 aufgenommene Kühlgel übertragt sodann im Prinzip den hydrostatischen Druck vom Druckelement 8 auf die Oberfläche des Schuhs 1. Durch den Kontakt zwischen der Kühlgamasche 16 und der erwärmten Schuhoberfläche kommt es zu einer sehr guten Wärmeleitung und zu einem raschen Abkühlen des Schuhs 1 in der an den Fuß 7 bzw. das Bein 7' des Benutzers angepassten Form.

## Patentansprüche

1. Vorrichtung zum Anpassen eines vorgefertigten, zumindest teilweise aus hartem, thermoplastischen Kunststoff bestehenden Schuhs (1) an den Fuß (7) bzw. das Bein (7') eines Benutzers, wobei ein den Schuh (1) im Wesentlichen umfassendes Druckelement (8) mit einem für die Aufnahme des Schuhs (1) vorgesehenen Aufnahmeraum (13) vorgesehen ist, wobei der Aufnahmeraum (13) zumindest teilweise von einem verformbaren Material begrenzt ist, das eine innere Schicht (8") des einen Hohlraum (8"') einschließenden Druckelements (8) bildet, das eine zum Einbringen eines Druckaufbringungsfluids vorgesehene Einlassöffnung (9) aufweist, wobei das Druckelement (8) zur Ausbildung des Hohlraums (8"') eine mit der inneren Schicht (8") dicht verbundene äußere Schicht (8') aufweist, **dadurch gekennzeichnet, dass** das Druckelement (8) zumindest in einem Bereich derart ausgebildet ist, dass kein Druckaufbringungsfluid eindringt.

2. Vorrichtung nach Anspruch 1, **dadurch gekennzeichnet, dass** in dem Bereich, in welchen kein Druckaufbringungsfluid eindringt, die innere und die äußere Schicht (8", 8') flächig miteinander verbunden sind.

3. Vorrichtung nach Anspruch 1, **dadurch gekennzeichnet, dass** in dem Bereich, in welchen kein Druckaufbringungsfluid eindringt, eine gänzliche Aussparung des Druckelements (8) vorgesehen ist.

4. Vorrichtung nach Anspruch 1, **dadurch gekennzeichnet, dass** in dem Bereich, in welchen kein Druckaufbringungsfluid eindringt, das Druckelement (8) einschichtig ausgebildet ist.

5. Vorrichtung nach einem der Ansprüche 1 bis 4, **dadurch gekennzeichnet, dass** der Bereich, in welchen kein Druckaufbringungsfluid eindringt, in einem zur Anlage im Bereich einer Sohle (5) des Schuhs (1) vorgesehenen Sohlenbereich (14) vorgesehen ist.

6. Vorrichtung nach einem der Ansprüche 1 bis 5, **dadurch gekennzeichnet, dass** eine Auslassöffnung (10) vorgesehen ist, die mit einem vorzugsweise als regelbares Druckbegrenzungsventil ausgebildeten Auslassventil (10') versehen ist.

7. Vorrichtung nach einem der Ansprüche 1 bis 6, **dadurch gekennzeichnet, dass** die innere Schicht (8") aus einem beschichteten Gewebe besteht.

8. Vorrichtung nach einem der Ansprüche 1 bis 7, **dadurch gekennzeichnet, dass** die äußere Schicht (8') aus einer Kunsstofffolie, insbesondere aus thermoplastischem Polyurethan, Polyvinylchlorid oder dergleichen, besteht.

9. Vorrichtung nach einem Ansprüche 1 bis 8, **dadurch gekennzeichnet, dass** der Umfang einer mit dem Aufnahmeraum (13) in Verbindung stehenden Einstiegsöffnung (12') über das Öffnen zumindest eines Verschlusselements (12) vergrößerbar ist.

10. Vorrichtung nach Anspruch 9, **dadurch gekennzeichnet, dass** sich ein über das Verschlusselement (12) verschließbarer Verbindungsbereich des Druckelements (8) im Wesentlichen von der Einstiegsöffnung (12') bis annähernd zu dem Sohlenbereich (14) erstreckt.

11. Verfahren zur Herstellung eines an den Fuß (7) bzw. das Bein (7') eines Benutzers angepassten Schuhs (1) aus hartem, thermoplastischen Kunststoff für Sportzwecke, wobei ein vorgefertigter Schuh (1) zumindest bereichsweise erwärmt und durch Verformen des erwärmten Bereichs unter Druckanwendung von außen angepasst wird, wonach der Schuh (1) abgekühlt wird,wobei der Schuh (1) im erwärmten Zustand in ein den Schuh (1) im Wesentlichen einfassendes hüllenförmiges Druckelement (8) eingeführt wird, wobei das Druckelement (8) zumindest teilweise aus einem verformbaren, einen Hohlraum (8"') begrenzenden Material besteht, wobei zur Ausbildung des Hohlraums (8"') das Druckelement (8) eine innere Schicht (8") aufweist, die dicht mit einer äußeren Schicht (8') verbunden ist, und ein Druckaufbringungsfluid in den Hohlraum (8"') eingeleitet wird, sodass der Schuh (1) zumindest bereichsweise an den Fuß (7) bzw. das Bein (7') des Benutzers angepasst wird, **dadurch gekennzeichnet, dass** das Druckelement (8) zumindest in einem Bereich derart ausgebildet ist, dass bei Einleitung des Druckaufbringungsfluids in den Hohlraum (8"') kein Druckaufbringungsfluid in diesen Bereich eindringt.

12. Verfahren nach Anspruch 11, **dadurch gekennzeichnet, dass** der Schuh (1), insbesondere in einem Ofen, zumindest bereichsweise über die Erweichungstemperatur des Materials des Schuhs (1) erwärmt wird, bevor der Fuß (7) des Benutzers in den Schuh (1) eingeführt wird.

13. Verfahren nach Anspruch 11 oder 12, **dadurch gekennzeichnet, dass** das Druckaufbringungsfluid unter einem Einlassdruck in das Druckelement (8) eingeleitet wird, der höher ist als ein Auslassdruck des zugleich abgeleiteten Druckaufbringungsfluids.

14. Verfahren nach einem der Ansprüche 11 bis 13, **dadurch gekennzeichnet, dass** eine den Schuh (1) zumindest bereichsweise abdeckende gekühlte Manschette (17) über den Schuh (1) gestülpt wird, bevor der Schuh (1) in das Druckelement (8) eingeführt wird.

15. Verfahren nach Anspruch 14, **dadurch gekennzeichnet, dass** die Manschette (17) unmittelbar nach dem Anziehen des Schuhs (1) durch den Benutzer über den Schuh (1) gestülpt wird.

## Claims

1. An apparatus for adapting a prefabricated item of footwear (1) consisting, at least in part, of hard thermoplastic material to a user's foot (7) and/or leg (7'), wherein a pressure exerting element (8) essentially enveloping said item of footwear (1) and having an accommodating space (13) intended for accommodating said item of footwear (1) is provided, said accommodating space (13) being at least partly delimited by a deformable material forming an inner layer (8") of said pressure exerting element (8), which contains a cavity (8"') and comprises an inlet opening (9) intended for introducing a pressure application fluid, and wherein said pressure exerting element (8) comprises an outer layer (8') tightly bonded to said inner layer (8") to form said cavity (8"'), **characterized in that** at least one area of said pressure exerting element (8) is formed such that said pressure application fluid will not enter.

2. An apparatus according to claim 1, **characterized in that** the inner and the outer layers (8", 8') are bonded face-to-face in the area where said pressure application fluid will not enter.

3. An apparatus according to claim 1, **characterized in that** said pressure exerting element (8) is not provided in the area where said pressure application fluid will not enter.

4. An apparatus according to claim 1, **characterized in that** said pressure exerting element (8) is formed as a single layer in the area where said pressure application fluid will not enter.

5. An apparatus according to any one of claims 1 to 4, **characterized in that** the area where said pressure application fluid will not enter is provided in a sole area (14) provided for abutment in the area of a sole (5) of said item of footwear (1).

6. An apparatus according to any one of claims 1 to 5, **characterized in that** an outlet opening (10) is provided having an outlet valve (10') preferably in the form of a controllable pressure control valve.

7. An apparatus according to any one of claims 1 to 6, **characterized in that** said inner layer (8") consists of coated fabric.

8. An apparatus according to any one of claims 1 to 7, **characterized in that** said outer layer (8') consists of a plastic sheet, particularly thermoplastic polyurethane, polyvinyl chloride or the like.

9. An apparatus according to any one of claims 1 to 8, **characterized in that** the circumference of an entry opening (12') connected to said accommodating space (13) is enlargeable by opening at least one closing element (12).

10. An apparatus according to claim 9, **characterized in that** a connecting area of said pressure exerting element (8), which area is closable by said closing element (12), extends essentially from said entry opening (12') to about the sole area (14).

11. A method for producing an item of footwear (1) adapted to a user's foot (7) and/or leg (7') consisting of hard thermoplastic material to be used in sports, wherein a prefabricated item of footwear (1) is heated at least in an area thereof and adapted by deforming said heated area by applying pressure from outside, and said item of footwear (1) is subsequently cooled, wherein said heated item of footwear (1) is inserted into a sleeve-like pressure exerting element (8) essentially enveloping said item of footwear (1), said pressure exerting element (8) being at least partly comprised of deformable material delimiting a cavity (8"'), wherein said pressure exerting element (8) comprises an inner layer (8") tightly bonded to an outer layer (8') to form said cavity (8"'), and wherein pressure application fluid is introduced into said cavity (8"') such that said item of footwear (1) is adapted to the user's foot (7) and/or leg (7') at least in an area thereof, **characterized in that** at least one area of said pressure exerting element (8) is formed such that pressure application fluid will not enter this area when said pressure application fluid is introduced into said cavity (8"').

12. A method according to claim 11, **characterized in that** said item of footwear (1) is heated at least in an area thereof, particularly in an oven, above the softening temperature of the material of said item of footwear (1) before the user's foot (7) is inserted into said item of footwear (1).

13. A method according to claims 11 or 12, **characterized in that** said pressure application fluid is introduced into said pressure exerting element (8) at an inlet pressure that is higher than the outlet pressure of the pressure application fluid drained off at the same time.

14. A method according to any one of claims 11 to 13, **characterized in that** a cooled collar (17) is put over said item of footwear (1), which collar covers at least part of said item of footwear (1), before said item of footwear (1) is inserted into said pressure exerting element (8).

15. A method according to claim 14, **characterized in that** said collar (17) is put over said item of footwear (1) immediately after the user has put on said item of footwear (1).

## Revendications

1. Dispositif pour l'adaptation d'une chaussure préfabriquée (1), de préférence au moins partiellement constituée d'une matière plastique dure thermoplastique, au pied (7) ou à la jambe (7') d'un utilisateur, un élément de pression (8) comprenant globalement la chaussure (1) étant muni d'un espace de logement (13) prévu pour le logement de la chaussure (1), l'espace de logement (13) étant limité au moins partiellement par un matériau déformable, qui forme une couche interne (8") de l'élément de pression (8) entourant un espace creux (8"'), qui comprend une ouverture d'entrée (9) prévue pour l'introduction d'un fluide d'application de pression, l'élément de pression (8) comprenant, pour la formation de l'espace creux (8"'), une couche externe (8') reliée de manière étanche avec la couche interne (8"), **caractérisé en ce que** l'élément de pression (8) est conçu au moins dans une zone de façon à ce qu'aucun fluide d'application de pression ne pénètre.

2. Dispositif selon la revendication 1, **caractérisé en ce que**, dans la zone, dans laquelle aucun fluide d'application de pression ne pénètre, la couche interne et la couche externe (8", 8') sont reliées entre elles sur leur surface.

3. Dispositif selon la revendication 1, **caractérisé en ce que**, dans la zone, dans laquelle aucun fluide d'application de pression ne pénètre, un évidement complet de l'élément de pression (8) est prévu.

4. Dispositif selon la revendication 1, **caractérisé en ce que**, dans la zone, dans laquelle aucun fluide d'application de pression ne pénètre, l'élément de pression (8) est réalisé en une seule couche.

5. Dispositif selon l'une des revendications 1 à 4, **caractérisé en ce que** la zone, dans laquelle aucun fluide d'application de pression ne pénètre, est prévue dans une zone de semelle (14) prévue pour un appui au niveau d'une semelle (5) de la chaussure (1).

6. Dispositif selon l'une des revendications 1 à 5, **caractérisé en ce qu'**une ouverture de sortie (10) est prévue, qui est munie d'une soupape de sortie (10') conçue de préférence comme une soupape de limitation de pression réglable.

7. Dispositif selon l'une des revendications 1 à 6, **caractérisé en ce que** la couche interne (8") est constituée d'un tissu revêtu.

8. Dispositif selon l'une des revendications 1 à 7, **caractérisé en ce que** la couche externe (8') est constituée d'un film de matière plastique, plus particulièrement d'un polyuréthane, d'un polychlorure de vinyle thermoplastique ou autre.

9. Dispositif selon l'une des revendications 1 à 8, **caractérisé en ce que** la circonférence d'une ouverture d'accès (12') reliée avec l'espace de logement (13) peut être agrandie par l'ouverture d'au moins un élément de fermeture (12).

10. Dispositif selon la revendication 9, **caractérisé en ce qu'**une zone de liaison, pouvant être fermée par l'élément de fermeture (12), de l'élément de pression (8) s'étend globalement de l'ouverture d'accès (12') approximativement jusqu'à la zone de semelle (14).

11. Procédé de fabrication d'une chaussure (1) adaptée au pied (7) ou à la jambe (7') d'un utilisateur, en matière plastique dure thermoplastique pour le sport, une chaussure (1) préfabriquée étant au moins partiellement chauffée et adaptée par déformation de la zone chauffée en appliquant une pression de l'extérieur, la chaussure (1) étant ensuite refroidie, la chaussure (1) étant introduite, dans son état chauffé, dans un élément de pression (8) en forme d'enveloppe entourant globalement la chaussure (1), l'élément de pression (8) étant constitué au moins partiellement d'un matériau déformable délimitant un espace creux (8"'), l'élément de pression (8) comprenant, pour la formation de l'espace creux (8"'), une couche interne (8"), qui est reliée de manière étanche avec une couche externe (8'), et un fluide d'application de pression étant introduit dans l'espace creux (8"'), de façon à ce que la chaussure (1) soit adaptée au moins partiellement au pied (7) ou à la jambe (7') de l'utilisateur, **caractérisé en ce que** l'élément de pression (8) est conçu, au moins dans une zone, de façon à ce que, lors de l'introduction du fluide d'application de pression dans l'espace creux (8"'), du fluide d'application de pression ne pénètre pas dans cette zone.

12. Procédé selon la revendication 11, **caractérisé en ce que** la chaussure (1) est chauffée, plus particulièrement dans un four, au moins partiellement au-dessus de la température de ramollissement du matériau de la chaussure (1) avant que le pied (7) de l'utilisateur soit introduit dans la chaussure (1).

13. Procédé selon la revendication 11 ou 12, **caractérisé en ce que** le fluide d'application de pression est introduit dans l'élément de pression (8) sous une pression d'entrée qui est supérieure à une pression de sortie du fluide d'application de pression évacué simultanément

14. Procédé selon l'une des revendications 11 à 13, **caractérisé en ce qu'**une manchette (17) refroidie, recouvrant au moins partiellement la chaussure (1) est enfilé sur la chaussure (1) avant que la chaussure (1) soit introduite dans l'élément de pression (8).

15. Procédé selon la revendication 14, **caractérisé en ce que** la manchette (17) est enfilée sur la chaussure (1) directement après l'enfilage de la chaussure (1) par l'utilisateur.
